(19)

Europäisches
Patentamt
European
Patent Office
Office européen
des brevets

(11)  **EP 3 678 042 A1**

(12)  **EUROPEAN PATENT APPLICATION**
published in accordance with Art. 153(4) EPC

(43) Date of publication:
**08.07.2020  Bulletin 2020/28**

(21) Application number: **18933729.8**

(22) Date of filing: **27.10.2018**

(51) Int Cl.:
**G06F 30/00** (2020.01)     **E04H 9/02** (2006.01)

(86) International application number:
**PCT/CN2018/112247**

(87) International publication number:
**WO 2020/073364 (16.04.2020 Gazette 2020/16)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **09.10.2018  CN 201811170543**

(71) Applicant: **Qingdao University Of Technology
Qingdao, Shandong 266520 (CN)**

(72) Inventor: **The designation of the inventor has not
yet been filed**

(74) Representative: **Kayahan, Senem
Yalciner Patent and Consulting Ltd.
Tunus Cad. No: 85/3-4
Kavaklidere Cankaya
06680 Ankara (TR)**

(54)  **METHOD FOR CALCULATING ANTI-SEISMIC BEARING CAPACITY OF STRUCTURAL
COMPONENT ON BASIS OF PERFORMANCE LEVEL**

(57)    The present disclosure relates to the technical field of seismic design, and provides a method for calculating a seismic bearing capacity of a structural element based on performance levels, including: setting different performance levels based on a maximum interlayer displacement angle of a structure, and calculating top displacements of the structure at different performance levels; according to a mass participation factor of a first mode shape and the top displacements of the structure at different performance levels, determining displacements of the first mode shape; according to the displacements of the first mode shape, obtaining a displacement of an equivalent single-degree-of-freedom system; selecting a plurality of ground motions suitable for a site, obtaining a plurality of seismic influence coefficients of the first mode shape at different performance levels; based on an average peak acceleration of the plurality of ground motions at different performance levels and according to a design response spectrum specified by a seismic code, obtaining a plurality of seismic influence coefficients; synthesizing a seismic action of the structure at different performance levels under the plurality of mode shapes; and calculating the bearing capacity. The seismic bearing capacity of the structural element is calculated based on the performance levels, and thus the seismic design method is more scientific.

**EP 3 678 042 A1**

**Description**

**TECHNICAL FIELD**

The present disclosure relates to the technical field of seismic design, and particularly to a method for calculating a seismic bearing capacity of a structural element.

**BACKGROUND**

The Chinese seismic code (GB 50011-2016) stipulates the 50-year seismic intensities. The intensities are expressed in terms of exceedance probabilities of ten percent (10%), sixty-three percent (63%) and two percent (2%), which represent, respectively, a frequently occurred seismic intensity, a basic seismic intensity, and a rare seismic intensity. Based on the elastic earthquake response spectrum of the fortification frequently occurred seismic intensity, the seismic actions are calculated by the mode decomposition method or the bottom shear method to result in a combination of seismic action effects, so as to accomplish the calculation of the seismic bearing capacity of the structural element. Based on the two-level conversion adopted by the American society of civil engineers (ASCE)7, and the international building code (IBC), two-thirds of the maximum earthquakes (corresponding to the "rare intensity" in the Chinese seismic code) that should be considered are converted into design earthquakes (corresponding to the "basic intensity" in the Chinese seismic code). The bottom shear method (equivalent lateral force method) and the mode decomposition method of static design are employed based on the design response spectrum. The structural response corrections of different structure types are taken into account by the structural adjustment coefficient, and the design seismic action is converted into an elastic range to perform a combination of the seismic action effects, so as to accomplish the calculation of the seismic bearing capacity. The European seismic code is similar to the IBC, the design seismic action is converted into the corresponding elastic seismic action by the performance coefficient to perform a combination of the seismic action effects, so as to complete the calculation of the seismic bearing capacity. The foregoing indicates that, the seismic codes of various countries are based on the fortification intensity or ground motion parameters to complete the calculation of the seismic bearing capacity of structural elements.

A reference design method for achieving the seismic performance design objective is provided in appendix M of the Chinese seismic code (GB 50011-2016), which provides a method for calculating the seismic bearing capacity of structural elements to achieve the seismic performance design objective. However, this method is still based on the intensity, and the calculation of the seismic bearing capacity of the structural elements is accomplished under the fortification ground motion, fortification intensity ground motion, and rare ground motion. In essence, the performance-based seismic design should be based on the performance level (rather than the intensity) to calculate the seismic bearing capacity of the structural elements. However, currently, there is no method for designing the seismic bearing capacity of structural elements based on the performance levels.

**SUMMARY**

The present disclosure provides a method for calculating a seismic bearing capacity of a structural element based on performance levels. Namely, the reference design method for achieving the seismic performance design objective based on the intensity, which is provided in appendix M of the Chinese seismic code (GB 50011-2016), is converted to that based on the performance level, so as to essentially realize the original intention of the performance-based seismic design.

In order to achieve the above-mentioned technical objective, the present disclosure adopts the following technical solution, including the following steps:

S1, setting different performance levels based on a maximum interlayer displacement angle of a structure, and calculating top displacements of the structure at different performance levels;

S2, determining, according to a mass participation factor of a first mode shape and the top displacements of the structure at different performance levels, displacements of the first mode shape at different performance levels;

S3, obtaining, according to the displacements of the first mode shape at different performance levels and based on a mapping relationship between the structure and an equivalent single-degree-of-freedom system, a displacement $\delta_p^1(n)$ of the equivalent single-degree-of-freedom system of the first mode shape at different performance levels;

S4, selecting a plurality of ground motions suitable for a site (namely, the plurality of ground motions meet the requirements of the seismic environment characteristics of the site, e.g. fault mechanism, fault displacement, site type, and others; and the response spectrum of the plurality of ground motions should match the site response spectrum specified in the seismic code.); according to an elastoplastic dynamic nonlinear equation of the equivalent single-degree-of-freedom system of the first mode shape, continuously adjusting a peak acceleration of the plurality of ground motions to allow a displacement response to be equal to the displacements of the equivalent single-degree-of-freedom system of the first mode shape at different performance levels; when the displacement response reaches the displacements of the equivalent single-degree-of-freedom system of the first mode shape at different performance levels, obtaining an average peak acceleration $A_{max}$ (n) of the plurality of ground motions and a corresponding seismic influence coefficient $\alpha_1$ (n) of the first mode shape at different performance levels;

S5, based on the average peak acceleration of the plurality of ground motions at different performance levels, and according to a design response spectrum specified in the seismic code, obtaining a plurality of seismic influence coefficients at different performance levels and different mode shapes excluding the first mode shape;

S6, synthesizing a seismic action of the structure at different performance levels under the plurality of mode shapes by using a square-root-sum-of-squares method or a complete quadratic combination method;

S7, calculating the bearing capacity according to a basic combination of seismic action effects with respect to a plurality of performance levels before yielding, wherein the basic combination adjusts a design value by considering the seismic action effects;

S8, calculating the bearing capacity with respect to a plurality of performance levels after yielding and before a less severe damage occurs; wherein the bearing capacity is calculated by the following two methods: (1) according to the basic combination of the seismic action effects adjusting the design value without considering the seismic action effects; (2) by a standard combination of the seismic action effects according to standard value of the bearing capacity of the structural element.

S9, calculating the bearing capacity according to the standard combination of the seismic action effects of an ultimate bearing capacity value of the structural element with respect to a plurality of performance levels after the less severe damage occurs until collapse occurs.

The seismic design accomplished based on the intensity or ground motion parameters is the dominant calculation method for seismic design in the 20th century. At the beginning of the 21st century, various countries in the world began to adopt the performance-based seismic design method. In 2010, the Chinese seismic code first introduced the performance-based seismic design method. Though these methods are oriented to the performance-based seismic design, these methods are still based on the intensity, and a real performance-based seismic design calculation method have not yet been developed. In the present disclosure, the seismic bearing capacity of the structural element is calculated based on the performance levels instead of the intensity. Calculating the seismic bearing capacity of the structural element directly based on the performance levels overcomes the uncertainty of intensity but brings an uncertainty to the calculation of seismic bearing capacity of structural elements (previously this uncertainty is compensated by increasing the reliability). The advantages of the present disclosure are as follows. First, the seismic bearing capacity of structural elements is calculated based on the quantified performance levels, which significantly improves the calculation accuracy. In addition, the seismic bearing capacity of structural elements can be calculated based on different performance levels, which can, indeed, meet different design requirements. Finally, the seismic bearing capacity of structural elements is calculated based on the performance levels, and thus the seismic design method is more scientific.

**DETAILED DESCRIPTION OF THE EMBODIMENTS**

In order to clearly describe the objectives, technical solutions, and advantages of the present disclosure, the reinforced concrete frame is taken as an example in conjunction with the embodiments to further describe the present disclosure in detail. It should be understood that the specific embodiments described herein are only intended to illustrate the present disclosure rather than limiting the present disclosure.

A method for calculating a seismic bearing capacity of a structural element based on performance levels of the present disclosure includes the following steps.

S1, different performance levels are set based on a maximum interlayer displacement angle of the structure, and top displacements of the structure at different performance levels are calculated.

S1-1, the maximum interlayer displacement angle of the structure can characterize the different performance levels of the structure, and the maximum interlayer displacement angles of the reinforced concrete frame structure corresponding to different performance levels specified in the seismic code are shown in Table 1.

Table 1 Performance levels

| Performance levels | I | II | III | IV | V |
|---|---|---|---|---|---|
| Maximum interlayer displacement angle | 1/550 | 1/250 | 1/120 | 1/60 | 1/50 |

S1-2, the PUSHOVER structure is configured to obtain the relationship between the maximum interlayer displacement angle and the top displacement of the structure, different performance levels are mapped to the top displacement $X_{top}(n)$ of the structure, where n represents different performance levels.

S2, the displacements of the first mode shape at different performance levels are determined according to a mass participation factor of the first mode shape and the top displacements of the structure at different performance levels.

S2-1, the participation coefficient of the mode shape is calculated.

The participation coefficient of the $j^{th}$ order mode shape is obtained by the following formula:

$$\gamma_j = \frac{\sum_{i=1}^{N} \phi_{i,j} G_i}{\sum_{i=1}^{N} \phi_{i,j}^2 G_i} \tag{1}$$

where, $\phi_{i,j}$ represents the $j^{th}$ order mode shape of the $i^{th}$ particle, $G_i$ represents the representative value of the gravitational load of the $i^{th}$ particle, N represents the number of mode shapes in a certain direction.

S2-2, the mass participation factor of the mode shape is calculated.

The mass participation factor of the $j^{th}$ order mode shape is obtained by the following formula:

$$\eta_j = \frac{\gamma_j^2 G_j}{\sum_{j}^{N} \gamma_j^2 G_j} \tag{2}$$

According to the Chinese code for high-rise building concrete structures and the American load code, the value of the number of mode shapes should be set to allow the sum of mass participation factors of the mode shapes to be greater than 90%.

S2-3, displacements of the first mode shape at different performance levels are calculated by the following formula:

$$X_{top}^1(\text{n}) = \eta_1 X_{top}(n) \tag{3}$$

where, $X_{top}^1(\text{n})$ represents the top displacement of the structure of the first mode shape; $\eta_1$ represents the mass participation factor of the first-order mode shape.

S3, according to the displacements of the first mode shape at different performance levels, and based on a mapping relationship between the structure and an equivalent single-degree-of-freedom system, the displacement $\delta_p^1(n)$ of the equivalent single-degree-of-freedom system of the first mode shape at different performance levels is obtained by the following formula;

$$\delta_p^1(n) = \frac{X_{top}^1(n)}{\gamma_1} \cong \frac{\eta_1 X_{top}(n)}{\gamma_1}$$

(4)

Alternatively, the formula described above is simplified as follows:

$$\delta_p^1(n) = \varphi_1 X_{top}(n) * \frac{\sum_{i=1}^{N} G_i \left(\frac{h_i}{H}\right)^2}{\sum_{i=1}^{N} G_i \frac{h_i}{H}}$$

(5)

where, $H_i$ represents the height of the $i^{th}$ storey, H represents the total height of the building, $\varphi_1$ represents the first simplified adjustment coefficient ranging from 0.80 to 0.95.

S4, a plurality of ground motions suitable for the site are selected; according to an elastoplastic dynamic nonlinear equation of the equivalent single-degree-of-freedom system of the first mode shape, a peak acceleration of the plurality of ground motions is repeatedly adjusted to allow a displacement response to be equal to the displacements of the equivalent single-degree-of-freedom system of the first mode shape at different performance levels; when the displacement response reaches the displacements of the equivalent single-degree-of-freedom system of the first mode shape at different performance levels, the average peak acceleration $A_{max}(n)$ of the plurality of ground motions and the corresponding seismic influence coefficient $\alpha_1(n)$ of the first mode shape at different performance levels are obtained.

S5, based on the average peak acceleration of the plurality of ground motions at different performance levels, and according to a design response spectrum specified in the seismic code, a plurality of seismic influence coefficients at different performance levels and different mode shapes excluding the first mode shape are obtained.

S5-1, the peak adjustment coefficient of the plurality of ground motions at different performance levels is calculated by the following formula:

$$\beta(n) = \frac{A_{max}(n)}{A_{code}(n)}$$

(6)

where, $A_{code}(n)$ represents a peak acceleration of the plurality of ground motions in the code, (approximately equivalent to the effective peak acceleration), wherein the peak acceleration is closest to $A_{max}(n)$.

S5-2, the seismic influence coefficients at different performance levels under different modes are calculated by the following formula:

$$\alpha_j(n) = \beta(n) * \alpha_{j-code}(n) \quad j = 1, m$$

(7)

where, $\alpha_{j-code}(n)$ represents the seismic influence coefficient given by the seismic code corresponding to the $j^{th}$ mode shape.

S6, the seismic actions of the structure at different performance levels under the plurality of mode shapes are synthesized by using a square-root-sum-of-squares method or a complete quadratic combination method.

S7, the bearing capacity according to a basic combination of seismic action effects with respect to a plurality of performance levels before yielding is calculated by the following formula, wherein the basic combination adjusts a design value by considering the seismic action effects;

$$\gamma_G S_{GE} + \gamma_E S_{EK}(P_n, \lambda, \zeta) \leq R/\gamma_{RE}$$

(8)

$\gamma_G$ represents the gravitational load partial coefficient; $S_{GE}$ represents the gravitational load representative value; $\gamma_E$ represents the seismic action partial coefficient; $S_{EK}(P_n, \lambda, \zeta)$ represents the standard value effect of the seismic action at the performance level; $P_n$ represents the plurality of performance levels before yielding, $\lambda$ represents the seismic effect adjustment coefficient according to the non-seismic performance-based design considering the seismic levels; $\zeta$ represents the stiffness degradation considering some secondary elements that enter the plastic state or the damping effect of the structural element with energy dissipation; R represents the design value of the bearing capacity of the structural element; $\gamma_{RE}$ represents the seismic adjustment coefficient of the bearing capacity.

S8, with respect to a plurality of performance levels after yielding and before the less severe damage occurs; 1) the bearing capacity is calculated according to the basic combination of seismic action effects that adjusts the design value without considering the seismic action effects; alternatively, 2) the bearing capacity is calculated according to standard combination of seismic action effects of standard values of the bearing capacity of the structural element.

$$\gamma_G S_{GE} + \gamma_E S_{EK}(P_n, \zeta) \leqslant R / \gamma_{RE} \tag{9}$$

where, $S_{EK}(P_n, \zeta)$ represents the standard value effect of the seismic action at the performance level; $P_n$ represents the performance levels after yielding and before the less severe damage occurs; when the $S_{EK}(P_n, \zeta)$ is calculated after yielding, the seismic influence coefficient should be divided by the response correction coefficient to take into account the influence factors such as plastic reduction and structural super strength.

The bearing capacity can also be calculated using the following formula:

$$S_{GE} + S_{EK}(P_n, \zeta) \leqslant R_k \tag{10}$$

where, $R_k$ represents the bearing capacity calculated according to the standard value of the material strength; $S_{EK}(P_n, \zeta)$ represents the standard value effect of the seismic action at the performance level; $P_n$ represents the performance levels after yielding and before the less severe damage occurs; when the $S_{EK}(P_n, \zeta)$ is calculated after yielding, the seismic influence coefficient should be divided by the response correction coefficient to take into account the influence factors such as plastic reduction and structural super strength.

The reliability of formula (9) is slightly greater than that of formula (10).

S9, the bearing capacity is calculated according to the standard combination of the seismic action effects of an ultimate bearing capacity value of the structural element with respect to a plurality of performance levels after the less severe damage occurs until the collapse occurs.

$$S_{GE} + S_{EK}(P_n, \zeta) \leq \varphi_2 R_u \tag{11}$$

where, $R_u$ represents the bearing capacity calculated based on the minimum ultimate strength of the material; $\varphi_2$ represents the reduction factor of the bearing capacity ranging from 0.85 to 1; $S_{EK}(P_n, \zeta)$ represents the standard value effect of the seismic action at the performance level; $P_n$ represents the performance levels after yielding and before the less severe damage occurs; when the $S_{EK}(P_n, \zeta)$ is calculated after yielding, the seismic influence coefficient should be divided by the response correction coefficient to take into account the influence factors such as plastic reduction and structural super strength.

To sum up, there are three substantial innovations (progresses) in the present disclosure. First, the seismic action is determined based on the performance level, which is reflected in steps S1-S4. Second, when the performance level is reached, the seismic action of the second-order or higher mode shape is determined, which is reflected in step S5. Third, the design formulas (M.1.2-1), (M.1.2-2), (M.1.2-3), and (M. 1.2-4) in appendix M of the Chinese seismic code are rewritten, which is reflected in steps S6 to S9, and $S_{EK}(P_n, \lambda, \zeta)$, and $S_{EK}(P_n, \zeta)$ are based on different performance levels $P_n$ instead of the fortification ground motion, fortification intensity ground motion, or rare ground motion I.

The core of the present disclosure is to determine the seismic action based on the performance levels (e.g. force, deformation, strain, ductility, energy, and curvature, etc.), and then complete the calculation of the bearing capacity of the structural element. It should be understood that those skilled in the art can make improvements or changes according to the foregoing description, and all these improvements and changes shall fall within the scope of protection of the appended claims of the present disclosure.

**Claims**

1. A method for calculating a seismic bearing capacity of a structural element based on performance levels, comprising the following steps:

S1, setting different performance levels based on a maximum interlayer displacement angle of a structure, and calculating top displacements of the structure at different performance levels;

S2, determining, according to a mass participation factor of a first mode shape and the top displacements of the structure at different performance levels, displacements of the first mode shape at different performance levels;

S3, obtaining, according to the displacements of the first mode shape at different performance levels and based on a mapping relationship between the structure and an equivalent single-degree-of-freedom system, a displacement $\delta_p^1(n)$ of the equivalent single-degree-of-freedom system of the first mode shape at different performance levels, wherein n represents the number of the different performance levels;

S4, selecting a plurality of ground motions suitable for a site; according to an elastoplastic dynamic nonlinear equation of the equivalent single-degree-of-freedom system of the first mode shape, continuously adjusting a peak acceleration of the plurality of ground motions to allow a displacement response to be equal to the displacement of the equivalent single-degree-of-freedom system of the first mode shape at different performance levels; when the displacement response reaches the displacement of the equivalent single-degree-of-freedom system of the first mode shape at different performance levels, obtaining an average peak acceleration $A_{max}$ (n) of the plurality of ground motions and a corresponding seismic influence coefficient $\alpha_1$ (n) of the first mode shape at different performance levels;

S5, obtaining, based on the average peak acceleration of the plurality of ground motions at different performance levels and according to a design response spectrum specified in a seismic code, a plurality of seismic influence coefficients at different performance levels and different mode shapes excluding the first mode shape;

S6, synthesizing a seismic action of the structure at different performance levels under the plurality of mode shapes by using a square-root-sum-of-squares method or a complete quadratic combination method;

S7, calculating the bearing capacity according to a basic combination of seismic action effects with respect to a plurality of performance levels before yielding, wherein the basic combination adjusts a design value by considering the seismic action effects;

S8, calculating the bearing capacity with respect to a plurality of performance levels after yielding and before a less severe damage occurs; and

S9, calculating the bearing capacity according to the standard combination of the seismic action effects of an ultimate bearing capacity value of the structural element with respect to a plurality of performance levels after the less severe damage occurs until collapse occurs.

2. The method for calculating the seismic bearing capacity of the structural element based on the performance levels according to claim 1, **characterized in that**, the step S1 comprises:

S1-1, characterizing the different performance levels of the structure by the maximum interlayer displacement angle of the structure, wherein maximum interlayer displacement angles of a reinforced concrete frame structure corresponding to different performance levels specified in the seismic code are different; and

S1-2, obtaining, by a PUSHOVER structure, a relationship between the maximum interlayer displacement angle and the top displacement of the structure, and mapping the different performance levels to the top displacement $X_{top}(n)$ of the structure, wherein n represents the different performance levels.

3. The method for calculating the seismic bearing capacity of the structural element based on the performance levels according to claim 2, **characterized in that**, the maximum interlayer displacement angles of the reinforced concrete frame structure corresponding to different performance levels specified in the seismic code in the step (S1-1) are shown in the following Table:

| Performance levels | I | II | III | IV | V |
|---|---|---|---|---|---|
| Maximum interlayer displacement angle | 1/550 | 1/250 | 1/120 | 1/60 | 1/50 |

4. The method for calculating the seismic bearing capacity of the structural element based on the performance levels according to claim 2 or 3, **characterized in that**, the step S2 comprises the following steps:

S2-1, calculating the participation coefficient of the mode shape;
wherein the participation coefficient of the $j^{th}$ order mode shape is obtained by the following formula:

$$\gamma_j = \frac{\sum_{i=1}^{N}\phi_{i,j}G_i}{\sum_{i=1}^{N}\phi_{i,j}^2 G_i}$$

where, $\phi_{i,j}$ represents the $j^{th}$ order mode shape of the $i^{th}$ particle, $G_i$ represents the representative value of the gravitational load of the $i^{th}$ particle, N represents the number of mode shapes in a predetermined direction; and
S2-2, calculating the mass participation factor of the mode shape;
wherein the mass participation factor of the $j^{th}$ order mode shape is obtained by the following formula:

$$\eta_j = \frac{\gamma_j^2 G_j}{\sum_{j}^{N}\gamma_j^2 G_j}\quad ,$$

the value of the number of mode shapes is set to allow the sum of mass participation factors of the mode shapes to be greater than 90%; and
S2-3, calculating displacements of the first mode shape at different performance levels by the following formula:

$$X_{top}^1(\mathrm{n}) = \eta_1 X_{top}(n)\quad ,$$

where, $X_{top}^1(\mathrm{n})$ represents the top displacement of the structure of the first mode shape; $\eta_1$ represents the mass participation factor of the first-order mode shape.

5. The method for calculating the seismic bearing capacity of the structural element based on the performance levels according to claim 4, **characterized in that**, the displacement $\delta_p^1(n)$ of the equivalent single-degree-of-freedom system of the first mode shape at different performance levels in the step S3 is calculated by the following formula:

$$\delta_p^1(n) = \frac{X_{top}^1(n)}{\gamma_1} = \frac{\eta_1 X_{top}(n)}{\gamma_1}\quad ;$$

or

$$\delta_p^1(\mathrm{n}) = \varphi_1 X_{top}(n) * \frac{\sum_{i=1}^{N}G_i\left(\frac{h_i}{H}\right)^2}{\sum_{i=1}^{N}G_i\frac{h_i}{H}}\quad ;$$

where, $H_i$ represents the height of the $i^{th}$ storey, H represents the total height of the building, $\varphi_1$ represents the first

simplified adjustment coefficient ranging from 0.80 to 0.95.

6. The method for calculating the seismic bearing capacity of the structural element based on the performance levels according to claim 5, **characterized in that**, the step S5 comprises:

S5-1, calculating the peak adjustment coefficient of the plurality of ground motions at different performance levels by the following formula:

$$\beta(\mathrm{n}) = \frac{A_{\max}(n)}{A_{code}(n)},$$

where, $A_{code}(n)$ represents a peak acceleration of the plurality of ground motions in the code, and is approximately equivalent to the effective peak acceleration, wherein the peak acceleration is closest to $A_{max}(n)$; and
S5-2, calculating the seismic influence coefficients at different performance levels under different modes by the following formula:

$$\alpha_j(n) = \beta(n) * \alpha_{j-code}(n) \quad j = 1, \ldots, m$$

selecting m mode shapes at each performance level, and calculating the seismic influence coefficient of the $j^{th}$ mode shape at each performance level; wherein j ranges from 1 to m, $\alpha_{j-code}(n)$ represents the seismic influence coefficient given by the code corresponding to the $j^{th}$ mode shape.

7. The method for calculating the seismic bearing capacity of the structural element based on the performance levels according to claim 6, **characterized in that**, the bearing capacity in step S7 is calculated by the following formula:

$$\gamma_G S_{GE} + \gamma_E S_{EK}(P_n, \lambda, \zeta) \leqslant R / \gamma_{RE}$$

where, $\gamma_G$ represents the gravitational load partial coefficient; $S_{GE}$ represents the gravitational load representative value; $\gamma_E$ represents the seismic action partial coefficient; $S_{EK}(P_n, \lambda, \zeta)$ represents the standard value effect of the seismic action at the performance level; $P_n$ represents the plurality of performance levels before yielding, $\lambda$ represents the seismic effect adjustment coefficient according to the non-seismic performance-based design considering the seismic levels; $\zeta$ represents the stiffness degradation considering some secondary elements that enter the plastic state or the damping effect of the structural element with energy dissipation; R represents the design value of the bearing capacity of the structural element; $\gamma_{RE}$ represents the seismic adjustment coefficient of the bearing capacity.

8. The method for calculating the seismic bearing capacity of the structural element based on the performance levels according to claim 7, **characterized in that**, in the step S8, the bearing capacity with respect to the plurality of performance levels after yielding and before the less damage occurs is calculated according to a basic combination of seismic action effects by the following formula, wherein the basic combination adjusts the design value without considering the seismic effects,

$$\gamma_G S_{GE} + \gamma_E S_{EK}(P_n, \zeta) \leqslant R / \gamma_{RE}$$

where, $S_{EK}(P_n, \zeta)$ represents the standard value effect of the seismic action at the performance level; $P_n$ represents the performance levels after yielding and before the less severe damage occurs; when the $S_{EK}(P_n, \zeta)$ is calculated after yielding, the seismic influence coefficient is divided by the response correction coefficient to take into account a plastic reduction and a structural super strength.

9. The method for calculating the seismic bearing capacity of the structural element based on the performance levels according to claim 7, **characterized in that**, in the step S8, the bearing capacity with respect to the plurality of performance levels after yielding and before the less damage occurs is calculated according to a standard combination of the seismic action effects of standard value of the bearing capacity of the structural element by the following formula:

$$S_{GE} + S_{EK}(P_n, \zeta) \leq R_k$$

where, $R_k$ represents the bearing capacity calculated by the standard value of the material strength; $S_{EK}(P_n, \zeta)$ represents the standard value effect of the seismic action at the performance level; $P_n$ represents the performance levels after yielding and before the less severe damage occurs; when the $S_{EK}(P_n, \zeta)$ is calculated after yielding, the seismic influence coefficient is divided by the response correction coefficient to take into account a plastic reduction and a structural super strength.

10. The method for calculating the seismic bearing capacity of the structural element based on the performance levels according to claim 7, **characterized in that**, in the step S9, the bearing capacity is calculated according to the standard combination of the seismic action effects of the ultimate bearing capacity value of the structural element with respect to the plurality of performance levels after the less severe damage occurs until the collapse occurs by the following formula:

$$S_{GE} + S_{EK}(P_n, \zeta) \leq \varphi_2 R_u$$

where, $R_u$ represents the bearing capacity calculated based on the minimum ultimate strength of the material; $\varphi_2$ represents the reduction factor of the bearing capacity ranging from 0.85 to 1; $S_{EK}(P_n, \zeta)$ represents the standard value effect of the seismic action at the performance level; $P_n$ represents the performance levels after yielding and before the less severe damage occurs; when $S_{EK}(P_n, \zeta)$ is calculated after yielding, the seismic influence coefficient is divided by the response correction coefficient to take into account the plastic reduction and the structural strength.

## INTERNATIONAL SEARCH REPORT

| International application No. |
|---|
| **PCT/CN2018/112247** |

**A. CLASSIFICATION OF SUBJECT MATTER**

G06F 17/50(2006.01)i;  E04H 9/02(2006.01)i

According to International Patent Classification (IPC) or to both national classification and IPC

**B. FIELDS SEARCHED**

Minimum documentation searched (classification system followed by classification symbols)

G06F,E04H

Documentation searched other than minimum documentation to the extent that such documents are included in the fields searched

Electronic data base consulted during the international search (name of data base and, where practicable, search terms used)

CNPAT, IEEE, CNKI, GOOGLE, WPI, EPODOC: 抗震, 承载力, 计算, 性能, 层间位移角, 位移, 加速度, 地震影响系数, earthquake resistance, calculate, bearing capacity, performance, inter-layer, displacement, angle, acceleration, influence coefficient

**C. DOCUMENTS CONSIDERED TO BE RELEVANT**

| Category* | Citation of document, with indication, where appropriate, of the relevant passages | Relevant to claim No. |
|---|---|---|
| A | 匿名 (ANONYMITY). "抗震性能化设计简介（一）(Non-official translation: Introduction to Seismic Performance Design (1))" *https://www.doc88.com/p-3972278097534.html*, 14 August 2014 (2014-08-14), pp. 4-9 | 1-10 |
| A | 徐其功 等 (XU, Qigong et al.). "基于性能的高层建筑钢结构抗震设计研究 (Application of Performance-Based Seismic Design in High-Rise Steel Building)" 钢结构 *(Steel Construction)*, Vol. 30, No. 7, 31 July 2015 (2015-07-31), pp. 70-75 | 1-10 |
| A | CN 108446444 A (QINGDAO TECHNOLOGICAL UNIVERSITY) 24 August 2018 (2018-08-24) entire document | 1-10 |
| A | CN 106049951 A (QINGDAO TECHNOLOGICAL UNIVERSITY) 26 October 2016 (2016-10-26) entire document | 1-10 |
| A | CN 108460200 A (QINGDAO TECHNOLOGICAL UNIVERSITY) 28 August 2018 (2018-08-28) entire document | 1-10 |

☑ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **28 June 2019** | **10 July 2019** |

| Name and mailing address of the ISA/CN | Authorized officer |
|---|---|
| **National Intellectual Property Administration, PRC (ISA/CN)** **No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2018/112247** |

| C. | DOCUMENTS CONSIDERED TO BE RELEVANT | |
| --- | --- | --- |
| Category* | Citation of document, with indication, where appropriate, of the relevant passages | Relevant to claim No. |
| A | US 2016378886 A1 (BUILDING MAGNITUDE TECHNOLOGY ANALYSIS AND RESEARCH SERVICE CO., LTD.) 29 December 2016 (2016-12-29)<br>entire document | 1-10 |

Form PCT/ISA/210 (second sheet) (January 2015)

**INTERNATIONAL SEARCH REPORT**
Information on patent family members

International application No.

**PCT/CN2018/112247**

| Patent document cited in search report | | | Publication date (day/month/year) | Patent family member(s) | | | Publication date (day/month/year) |
|---|---|---|---|---|---|---|---|
| CN | 108446444 | A | 24 August 2018 | None | | | |
| CN | 106049951 | A | 26 October 2016 | None | | | |
| CN | 108460200 | A | 28 August 2018 | None | | | |
| US | 2016378886 | A1 | 29 December 2016 | KR | 20140135136 | A | 25 November 2014 |
| | | | | WO | 2016064117 | A1 | 28 April 2016 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 500112016 A